**Europäisches Patentamt**

**European Patent Office**

**Office européen des brevets**

(11) Veröffentlichungsnummer: **0 062 229**
**B1**

(12) **EUROPÄISCHE PATENTSCHRIFT**

(45) Veröffentlichungstag der Patentschrift:
**20.06.84**

(21) Anmeldenummer: **82102398.3**

(22) Anmeldetag: **23.03.82**

(51) Int. Cl.³: **B 60 J 3/02**

(54) **Gegenlagerböckchen für Fahrzeugsonnenblenden.**

(30) Priorität: **04.04.81 DE 3113625**

(43) Veröffentlichungstag der Anmeldung:
**13.10.82 Patentblatt 82/41**

(45) Bekanntmachung des Hinweises auf die Patenterteilung:
**20.06.84 Patentblatt 84/25**

(84) Benannte Vertragsstaaten:
**DE FR GB IT SE**

(56) Entgegenhaltungen:
**FR - A - 1 109 788**

(73) Patentinhaber: **Gebr. Happich GmbH,**
**Postfach 10 02 49 Clausenbrücke 1,**
**D-5600 Wuppertal 1 (DE)**

(72) Erfinder: **Viertel, Lothar, V. Gartenreihe 48,**
**D-6630 Saarlouis (DE)**
Erfinder: **Kaiser, Peter, Sellscheid 42,**
**D-5632 Wermelskirchen (DE)**

**Beschreibung**

Die Erfindung bezieht sich auf ein Gegenlagerböckchen für Fahrzeugsonnenblenden der im Oberbegriff des Anspruchs 1 erwähnten Art. Ein derartiges Gegenlagerböckchen ist aus der FR-A-1109788 bekannt.

Derartige Gegenlagerböckchen dienen zur einendigen Lagerung von Sonnenblenden, die sowohl klappbar vor der Frontscheibe von Fahrzeugen angeordnet sind, als auch über ein Schwenklager zur Seitenscheibe hin verschwenkt werden können und werden auch als Fanglager bezeichnet, weil sie die Sonnenblendenachse an dem dem Schwenklager abgewandten Endbereich nur dann lagern, wenn sich der Sonnenblendenkörper vor der Frontscheibe befindet. Bei diesen Gegenlagerböckchen ist es wichtig, dass der Einführungsschlitz und die Lageröffnung exakt mit der Sonnenblendenachse bzw. Gegenlagerachse fluchten, weil andernfalls kein behinderungsfreies Abziehen und Wiedereinstecken der Gegenlagerachse aus bzw. in die Lageröffnung gewährleistet ist. Ein genaues Ausfluchten von Lageröffnung und Gegenlagerachse wird durch die im allgemeinen vorhandenen Bautoleranzen in der Rohkarosse und weiterhin auch dadurch erschwert, dass der Karosseriebereich oberhalb der Frontscheibe von Fahrzeugen, an dem die Gegenlagerböckchen für die Sonnenblenden zu befestigen sind, mehr oder weniger gewölbt ausgebildet ist. Die gewölbte Ausbildung der Karosserie macht eine entsprechende auflageseitige Anpassung der Gegenlagerböckchen erforderlich, und zwar dergestalt, dass die Gegenlagerböckchen im allgemeinen in Rechts- und Linksausführung ausgebildet werden, was die Herstellung und Lagerhaltung sowie auch die Montage erschwert und verteuert. Durch die Rechts- und Linksausführung der Gegenlagerböckchen lässt sich ein Ausgleich vorhandener Bautoleranzen in der Rohkarosse jedoch nicht erreichen, so dass das Bedürfnis bestehen bleibt, eine Ausfluchtung zwischen der Lageröffnung des Gegenlagerböckchens und der Gegenlagerachse erzielen zu müssen.

Die der Erfindung zugrundeliegende Aufgabe besteht nun darin, ein Gegenlagerböckchen der eingangs genannten Art so zu gestalten, dass eine Ausfluchtung zwischen seiner Lageröffnung und der Gegenlagerachse einer Sonnenblende schnell und einfach zu erzielen ist.

Diese Aufgabe wird erfindungsgemäss dadurch gelöst, dass der Kopfteil separat gefertigt und verschwenkbar am Fussteil angeordnet ist. Dabei ist es, von Sonderfällen einmal abgesehen, im allgemeinen ausreichend, wenn der Kopfteil nur parallel zur axialen Ausrichtung der Lageröffnung verschwenkbar ist.

Durch die zweiteilige Ausbildung des Gegenlagerböckchens wird in erster Linie eine Verstellbarkeit in der Achsebene erreicht, so dass es möglich ist, die Lageröffnung schnell und einfach in Ausfluchtung mit der Gegenlagerachse der Sonnenblende zu bringen, wodurch ein Verkanten der Gegenlagerachse in der Lageröffnung vermieden wird. Die erfindungsgemässe Verstellbarkeit des Gegenlagerböckchens kommt aber nicht nur zum Tragen, um Bautoleranzen in der Rohkarosse auszugleichen, sondern ermöglicht es auch, von der bisherigen Praxis der Links-/Rechtsausführung Abstand zu nehmen. Weiterhin bietet die Erfindung den Vorteil, dass der Fussteil auswechselbar mit dem Kopfteil verbunden ist, so dass sich Einsatzmöglichkeiten für verschiedene Kraftfahrzeugtypen anbieten, indem nur der Fussteil des Gegenlagerböckchens ausgetauscht wird.

Vorteilhafte Weiterbildungen und zweckmässige Ausgestaltungen der Erfindung sind in den Unteransprüchen gekennzeichnet.

Im folgenden wird die Erfindung anhand eines in der Zeichnung dargestellten Ausführungsbeispiels näher erläutert. Es zeigen

Fig. 1 eine Sonnenblendenanordnung in einem Fahrzeug,

Fig. 2 die Explosivdarstellung eines Gegenlagerböckchens,

Fig. 3 im vergrösserten Massstab das Gegenlagerböckchen nach Fig. 2 in einer Schnittdarstellung gemäss der Linie III–III in Fig. 4 und

Fig. 4 einen Schnitt gemäss der Linie IV–IV nach Fig. 3.

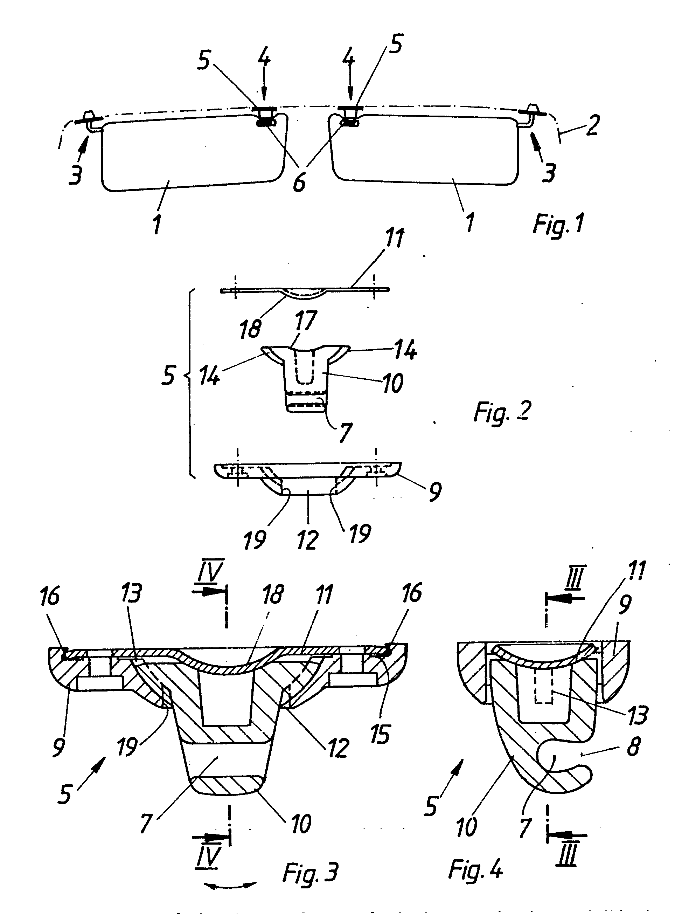

Fig. 1 zeigt die Anordnung von zwei Sonnenblenden 1 an einer Fahrzeugkarosserie 2 oberhalb der nicht gezeigten Frontscheibe eines Fahrzeuges. Jede Sonnenblende 1 besitzt einendig ein sogenanntes Schwenklager 3 und anderendig ein Gegenlager 4, welches aus einem an der Fahrzeugkarosserie 2 festlegbaren Gegenlagerböckchen 5 und einer Gegenlagerachse 6 besteht, wobei die Gegenlagerachse 6 Bestandteil der Sonnenblende 1 ist. Das Gegenlagerböckchen 5 weist eine Lageröffnung 7 für die Lagerung der Gegenlagerachse 6 der Sonnenblende 1 auf, in die ein radialer Einführungsschlitz 8 mündet. Der Einführungsschlitz 8 ermöglicht es, die Gegenlagerachse 6 aus der Lageröffnung 7 herauszuziehen, wenn der Sonnenblendenkörper zur Seitenscheibe des Fahrzeuges verschwenkt werden soll, und umgekehrt natürlich auch, um ein Wiedereinstecken der Gegenlagerachse 6 in die Lageröffnung 7 zu ermöglichen, wenn der Sonnenblendenkörper vor der Frontscheibe angeordnet sein soll.

Das Gegenlagerböckchen 5 besteht im einzelnen aus einem an der Fahrzeugkarosserie 2 festlegbaren Fussteil 9, einem Kopfteil 10 und einem Klemmblech 11. Der Fussteil 9 besitzt eine zentrische Öffnung 12, die von Bereichen des Kopfteils 10 durchsetzt wird. An die Öffnung 12 schliessen sich in der Gebrauchslage des Gegenlagerböckchens 5 nach Fig. 3 nach links und rechts gekrümmte Lagerflächen an, die jeweils eine eingearbeitete Führungsnut 13 aufweisen, in die jeweils ein am Kopfteil 10 angeordneter Führungsnocken 14 eingreift. Der Kopfteil 10 besitzt einen verjüngten, die Lageröffnung 7 aufweisenden Endbereich, der die Öffnung 12 des Fussteils 9 durchgreift und einen verdickten Endbereich mit den Führungsnocken 14, der sich auf den Lagerflächen des Fussteils 9 abstützt. Bei der Montage wird zunächst der Kopfteil 10 durch die Öffnung 12 des Fussteils 9 gesteckt und danach der Kopfteil 10 gegenüber dem Fussteil 9 festgelegt, und zwar durch das Klemmblech 11, welches in einer Ausnehmung 15 des Fussteils 9 angeordnet und durch hinterschnittene Wandungen 16 gehalten ist. Der Kopfteil 10 besitzt eine schalenförmige Einsenkung 17, in der sich eine entsprechende Einsenkung 18 des Klemmbleches 11 abstützt. Die Verstellbarkeit des Kopfteils 10 in Doppelpfeilrichtung nach Fig. 3 ist durch die Endanschläge bildende Wandungen 19 der zentralen Öffnung 12 begrenzt, wobei jedoch Versuche gezeigt haben, dass die Verstellbarkeit des Kopfteils 10 auf jeden Fall gross genug ist, um von der Rechts-/Linksausführung Abstand zu nehmen und um Bautoleranzen ausgleichen zu können. Ein ungewolltes Verstellen des Kopfteils 10 gegenüber dem Fussteil 9 wird durch die Federkraft des am Kopfteil 10 angreifenden Kelmmblechs 11 zuverlässig verhindert, so dass nach einem Einstellen des Kopfteils 10 immer ein verkantungsfreies Einstecken und Wiederherausziehen der Gegenlagerachse 6 der Sonnenblende 1 in bzw. aus der Lageröffnung 7 gewährleistet ist.

**Patentansprüche**

1. Gegenlagerböckchen für Fahrzeugsonnenblenden, bestehend aus einem an einer Fahrzeugkarosserie (2) befestigbaren Fussteil (9) und einem damit verbundenen Kopfteil (10), welcher eine Lageröffnung (7) für die Gegenlagerachse (6) einer Sonnenblende (1) und einen deren wiederholtes Einstecken in die Lageröffnung (7) ermöglichenden radialen Einführungsschlitz (8) aufweist, dadurch gekennzeichnet, dass der Kopfteil (10) separat gefertigt und verschwenkbar am Fussteil (9) angeordnet ist.

2. Gegenlagerböckchen nach Anspruch 1, dadurch gekennzeichnet, dass der Kopfteil (10) nur parallel zur axialen Ausrichtung der Lageröffnung (7) verschwenkbar ist.

3. Gegenlagerböckchen nach Anspruch 1 oder 2, dadurch gekennzeichnet, dass der Kopfteil (10) gegen die Kraft eines am Fussteil (9) angeordneten Klemmelements (11) verschwenkbar ist.

4. Gegenlagerböckchen nach einem der Ansprüche 1 bis 3, dadurch gekennzeichnet, dass der Fussteil (9) eine von seiner Auflageseite her zugängliche, etwa halbkreisförmig ausgebildete Lagerfläche für den Kopfteil (10) aufweist, wobei die Lagerfläche eine zentrale Öffnung (12) besitzt, durch die der Kopfteil (10) mit dem die Lageröffnung (7) aufweisenden Bereich hindurchgreift.

5. Gegenlagerböckchen nach Anspruch 4, dadurch gekennzeichnet, dass die Lagerfläche beidseitig der zentralen Öffnung (12) mit einer Führungsnut (13) ausgebildet ist, in die jeweils ein am Kopfteil (10) angeordneter Führungsnokken (14) eingreift.

6. Gegenlagerböckchen nach einem oder mehreren Ansprüchen 1 bis 5, dadurch gekennzeichnet, dass der Fussteil (9) und der Kopfteil (10) jeweils aus einem Kunststoff-Spritzgussteil besteht und dass das Klemmelement (11) aus einem Blechstreifen gebildet ist.

7. Gegenlagerböckchen nach einem der Ansprüche 1 bis 6, dadurch gekennzeichnet, dass das Klemmelement (11) in eine Ausnehmung (15) an der Auflageseite des Fussteils (9) eingeklipst ist und unter Vorspannung an dem Kopfteil (10) anliegt.

**Claims**

1. An outer-bearing bracket for a vehicle sun visor, the bracket comprising a base part (9) fastenable to the vehicle body (2) and a top part (10) joined to the base part and having an orifice (7) for the outer-bearing shaft (6) of the visor (1) including a radially extending lead-in slot (8) for permitting the outer-bearing shaft to be repeatedly inserted into the orifice (7), characterized in that the top part (10) is a separately manufactured component which is swivably arranged on the base part (9).

2. An outer-bearing bracket according to claim 1, characterized in that the top part (10) is swivable only in a direction parallel with the axial orientation of the orifice (7).

3. An outer-bearing bracket according to claim 1 or claim 2, characterized in that the top part (10) is swivable against the bias of a clamping element (11) arranged in the base part (9).

4. An outer-bearing bracket according to any of the claims 1 to 3, characterized in that the base part (9) includes a substantially semi-circular bearing surface for the top part (10), which bearing surface is accessible from the base part's mounting face and which is provided with a central aperture (12) for the passage therethrough of that section of the top part (10) that comprises the orifice (7).

5. An outer-bearing bracket according to claim 4, characterized in that the bearing surface is provided with guide grooves (13) one each extending from each side of the central aperture (12), and in that each of the grooves is engaged by a respective one of two guide dogs (14) arranged on the top part (10).

6. An outer-bearing bracket according to any one or more of the claims 1 to 5, characterized in that the base part (9) and the top part (10) are each injection-moulded plastics components, and in that the clamping element (11) is a sheet-metal strip.

7. An outer-bearing bracket according to any of the claims 1 to 6, characterized in that the clamping element is snapped into a recess (15) disposed in the mounting face of the base part (9) and is pre-tensioned to bear against the top part (10).

**Revendications**

1. Support de contre-appui pour pare-soleil de véhicules, comprenant un pied (9) pouvant être fixé à la carrosserie (2) du véhicule et une tête (10) qui lui est reliée, qui comporte une ouverture (7) de palier pour l'axe de contre-appui (6) d'un pare-soleil (1) et une fente d'introduction radiale (8) permettant de l'introduire à plusieurs reprises dans l'ouverture de palier (7), caractérisé en ce que la tête (10) est fabriquée séparément et est placée sur le pied (9) de façon à pouvoir pivoter.

2. Support selon la revendication 1, caractérisé en ce que la tête (10) ne peut pivoter que parallèlement à l'orientation axiale de l'ouverture de palier (7).

3. Support selon la revendication 1 ou 2, caractérisé en ce que la tête (10) peut pivoter contre la force d'un élément de serrage (11) placé sur le pied (9).

4. Support selon l'une des revendications 1 à 3, caractérisé en ce que le pied (9) comporte une surface d'appui de la tête (10) de conformation sensiblement semi-circulaire accessible par son côté d'appui, cette surface d'appui comportant une ouverture centrale (12) par laquelle passe la tête (10) avec la zone comportant l'ouverture de palier (7).

5. Support selon la revendication 4, caractérisé en ce que la surface d'appui comporte de chaque côté de l'ouverture centrale (12) une rainure de guidage (13) dans laquelle pénètre une mémoire de guidage (14) respective placée sur la tête (10).

6. Support selon l'une ou plusieurs des revendications 1 à 5, caractérisé en ce que le pied (9) et la tête (10) sont constitués chacun par une pièce en matières plastique moulée par injection, et en ce que l'élément de serrage (11) est constitué par une bande de tôle.

7. Support selon l'une des revendications 1 à 6, caractérisé en ce que l'élément de serrage (11) est emboîté dans un évidement (15) de la face d'appui du pied (9) et est en contact avec la tête (10) avec précontrainte.

Fig. 1

Fig. 2

Fig. 3

Fig. 4